# EUROPÄISCHE PATENTSCHRIFT

(11) **EP 1 992 059 B1**
(45) Veröffentlichungstag und Bekanntmachung des Hinweises auf die Patenterteilung: **16.06.2010**
(21) Anmeldenummer: 07701346.4
(22) Anmeldetag: 01.03.2007
(51) Int. Cl.: H02K 33/00, H02K 16/00, H02K 49/06

(54) **VORRICHTUNG UND VERFAHREN ZUR ERZEUGUNG VON DREHSCHWINGUNGE**
APPARATUS AND METHOD FOR GENERATING ROTARY OSCILLATIONS
DISPOSITIF ET PROCEDE POUR GENERER DES VIBRATIONS TORSIONELLES

(30) Priorität: 03.03.2006 AT 3642006
(43) Veröffentlichungstag der Anmeldung: 19.11.2008
(73) Patentinhaber: KRISTL, SEIBT & CO. GESELLSCHAFT M.B.H., A-8052 Graz (AT)
(72) Erfinder: ROSSEGGER, Wilfried, A-8052 Graz (AT); BAUMGARTNER, Karl, A-8043 Graz (AT)
(74) Vertreter: Sonn & Partner Patentanwälte
(86) Internationale Anmeldenummer: PCT/AT2007/000105
(87) Internationale Veröffentlichungsnummer: WO 2007/098521

(56) Entgegenhaltungen:
- WO-A-03/047076
- WO-A-2005/064776
- DE-A1- 2 057 347
- DE-C- 537 551
- DE-C- 974 497
- FR-A- 1 452 601
- JP-A- 2003 126 776
- US-A- 3 772 913
- US-A- 4 283 957

## Beschreibung

Die Erfindung betrifft eine Vorrichtung zur Erzeugung von Drehschwingungen mit zwei zueinander verschwenkbaren Wellen, wobei ein Endabschnitt einer ersten Welle unter Ausbildung eines Luftspalts innerhalb eines Endabschnitts einer zweiten Welle aufgenommen ist. Weiters betrifft die Erfindung ein Verfahren zur Erzeugung von Drehschwingungen.

Die Verfügungstellung von Drehschwingungen, d.h. zeitlich variierenden Drehbewegungen, wird für verschiedene Anwendungen, insbesondere im Bereich der Prüfung von Maschinen, Einrichtungen und Maschinenteilen, die einer Drehbewegung unterliegen, benötigt.

Aus dem Stand der Technik sind bereits verschiedene Vorrichtungen zur Erzeugung von Drehschwingungen bekannt. Hierbei handelt es sich insbesondere um Vorrichtungen, bei welchen eine konstante Drehbewegung durch eine modulierte Druckbeaufschlagung einer hydraulischen Kupplung überlagert wird, so dass am Ausgang die Summe der beiden Drehbewegungen zur Verfügung steht. Derartige druckmodulierte hydraulische Kupplungen sind beispielsweise aus der DE 2 057 347 A, sowie der US 4,283,957 A und der
US 3,772,913 A bekannt. Mit derartigen druckmodulierten hydraulischen Kupplungen können jedoch aufgrund der Kompressibilität der Hydraulikflüssigkeit lediglich Frequenzen von bis zu maximal 800 Hz erzielt werden.

Aus der WO 2005/064776 A ist zudem eine Magnetkupplungsanordnung bekannt, deren An- und Abtriebswelle Permanentmagnete zur Drehmomentübertragung aufweisen. Um bekannte Magnetkupplungen zur berührungslosen Kraftübertragung in Hinblick auf den Wirkungsgrad, die Montage- und Wartungsfreundlichkeit zu verbessern, ist zwischen den Magnetanordnungen an An- und Abtriebswelle ein Spalttopf in Form einer Spule aus Endlosmaterial vorgesehen.

Eine andersartige Vorrichtung ist aus der JP 2003126776 A bekannt, bei welcher zwei ortsfest angeordnete, von einer Gleichstromquelle angespeiste Magnete vorgesehen sind. Bei einer derartigen Vorrichtung ist somit lediglich die Erzeugung einer Torsionsschwingung um eine fixe Nulllage möglich.

Weiters ist aus der FR-A-1 452 601 ein Vibrationsgenerator bekannt, der einen Stator und einen Rotor aufweist, wobei die Übertragung des die Vibration verursachenden Drehmoments mithilfe von Permanentmagneten erreicht wird, welche sowohl im Stator als auch im Rotor angeordnet sind. Die magnetischen Feldlinien der Permanentmagnete sind hierbei so geführt, dass zwischen einem Magneten des Stators und einem des Rotors immer nur entweder eine Anziehung oder eine Abstoßung ausgeübt wird.

Andererseits ist es auch bereits bekannt, mittels elektrischer Maschinen Drehschwingungen zu erzeugen. Hierbei wird ein Rotor einer elektrischen Maschine mit einem elektrischen Drehfeld rotatorisch mitbewegt, wobei sowohl eine Grunddrehung als auch eine Drehungleichförmigkeit zur Erzielung der gewünschten Drehschwingungen in dem Drehfeld vorhanden sind. Um das Trägheitsmoment des Rotors gering halten zu können, werden hierbei im Allgemeinen Synchronmaschinen eingesetzt. Mit derartigen Maschinen können jedoch in unbelastetem Zustand maximal Drehbeschleunigungen bis zu 12000 rad/s² erzielt werden. Sofern derartige Maschinen mit einem Prüfling zu dessen Prüfung belastet werden, der beispielsweise ein Trägheitsmoment von ca. 0,1 kgm² aufweist, können mit derartigen Synchronmaschinen nur mehr Drehbeschleunigungen bis zu 4000 rad/s² erreicht werden.

Ziel der vorliegenden Erfindung ist es nun, eine Vorrichtung zur Erzeugung von Drehschwingungen zu schaffen, mit welcher auf einfache Weise hochfrequente Drehschwingungen, insbesondere auch Drehbeschleunigungen größer 10000 rad/s², erzeugt werden können.

Dies wird mit einer Vorrichtung der eingangs angeführten Art dadurch erzielt, dass eine der beiden Wellen Mittel zum Erzeugen eines Magnetfelds mit im Wesentlichen konstanter Feldstärke aufweist und die andere Welle ein magnetisches Feld erzeugende Leiter aufweist, die zum Verschwenken der Wellen zueinander variabel mit Strom beaufschlagbar sind. Durch die Ineinander-Anordnung der beiden Wellenabschnitte und die Erzeugung eines betragsmäßig zeitlich im Wesentlichen konstanten Magnetfelds mit Hilfe einer der beiden Wellen, welches zur Erzeugung einer rotatorischen Schwingbewegung von dem durch die variabel mit Strom beaufschlagten Leiter erzeugten Magnetfeld überlagert wird, können im Vergleich zu bekannten Synchronmaschinen auf einfache Weise hohe Drehbeschleunigungen von größer 10000 rad/s², insbesondere größer 40000 rad/s², erzielt werden. Hierbei kann die Feldstärke des betragsmäßig im Wesentlichen konstanten Magnetfelds ebenfalls gewissen Änderungen unterliegen, diese Änderungen sind jedoch geringer als jene der Feldstärke des Magnetfelds, das von den variabel mit Strom beaufschlagten Leitern erzeugt wird.

Zum Erzeugen eines im Wesentlichen betragsmäßig konstanten Magnetfelds mit Hilfe einer der beiden Wellen ist es günstig, wenn als Mittel zum Erzeugen eines Magnetfelds mit im Wesentlichen konstanter Feldstärke an eine Stromquelle angeschlossene Leiter vorgesehen sind. Das betragsmäßig zeitlich im Wesentlichen konstante Magnetfeld kann in Bezug zu der das Magnetfeld erzeugenden Welle räumlich konstant oder räumlich drehend ausgeführt sein. Zur Ausbildung eines räumlich in Bezug auf die das Magnetfeld erzeugende Welle drehenden Magnetfelds können die Leiter zum Erzeugen des Magnetfelds mit im Wesentlichen konstanter Feldstärke als Mehrphasenwicklungen ausgeführt sein. Alternativ ist es ebenso möglich, dass als Mittel zum Erzeugen eines konstanten Magnetfelds Permanentmagnete vorgesehen sind.

Zur Prüfung von Maschinenteilen, die einer rotatorischen Belastung unterliegen, ist es vorteilhaft, wenn die beiden Wellen frei drehbar gelagert sind, wobei die als Eingangswelle ausgebildete Welle angetrieben ist. Hierbei wird die Eingangswelle üblicherweise mit einer im Wesentlichen konstanten Drehzahl angetrieben, so dass aufgrund des betragsmäßig im Wesentlichen konstanten Magnetfelds beide Wellen mit im Wesentlichen konstanter Drehzahl umlaufen; mit Hilfe der variabel mit Strom beaufschlagbaren Leiter kann jedoch das betragsmäßig im Wesentlichen konstante Magnetfeld zur Erzeugung von Drehschwingungen mit einem variierenden Magnetfeld überlagert werden, und somit die Abtriebswelle in Abhängigkeit von dem variabel aufgebrachten Strom in Drehschwingung versetzt werden. Bei einer speziellen Ausgestaltung der Vorrichtung kann die Eingangswelle jedoch auch drehfest angeordnet sein, und lediglich die Ausgangswelle verschwenkbar gelagert sein.

Zum Antrieb der Eingangswelle ist es günstig, wenn die Eingangswelle direkt mit einer Antriebswelle einer Antriebsvorrichtung, insbesondere eines Elektromotors, verbunden ist. Alternativ ist es zum Antrieb der Eingangswelle ebenso denkbar, dass die Eingangswelle über eine Drehmomentübertragungsvorrichtung, z.B. einen Antriebsriemen, mit einer Antriebswelle einer Antriebsvorrichtung, insbesondere eines Elektromotors, verbunden ist.

Hinsichtlich einer effizienten Übertragung der im Bereich der ineinander angeordneten Wellen wirkenden Magnetkräfte ist es von Vorteil, wenn eine der beiden Wellen einen Ringspalt zur Ausbildung des Luftspalts und zur Aufnahme eines zylindrischen Hohlwellen-Abschnitts der anderen Welle aufweist. Weiters ist es hinsichtlich einer effizienten Kraftübertragung von Vorteil, wenn die Mittel zum Erzeugen eines Magnetfelds mit im Wesentlichen konstanter Feldstärke oder die Leiter in dem radial außerhalb des Ringspalts angeordneten Teil der Welle angeordnet sind. Hierbei ist es insbesondere günstig, wenn die Eingangswelle den Ringspalt zur Aufnahme des zylindrischen Hohlwellen-Abschnitts der Ausgangswelle aufweist. Selbstverständlich könnte jedoch auch der Ringspalt in der Ausgangswelle vorgesehen sein, in welchem ein Hohlwellen-Abschnitt der Eingangswelle.aufgenommen ist.

Um das Trägheitsmoment der den Ringspalt aufweisenden Welle gering zu halten, ist es günstig, wenn der radial außerhalb des Ringspalts angeordnete, drehbare Teil von einem drehfest angeordneten Stator umgeben ist, so dass der äußere Teil der Welle vergleichsweise dünnwandig ausgebildet sein kann. Hierbei kann der Magnetfluss über einen Luftspalt von dem äußeren Teil der Welle in den Stator geführt werden.

Zudem ist es bevorzugt, dass die Eingangswelle die Mittel zum Erzeugen eines Magnetfelds mit im Wesentlichen konstanter Feldstärke und die Ausgangswelle die variabel mit Strom beaufschlagbaren Leiterwicklungen aufweist. Es ist jedoch ebenso möglich, dass mittels der Ausgangswelle ein im Wesentlichen konstantes Magnetfeld erzeugt wird und mit Hilfe der Eingangswelle zur Erzeugung der Drehschwingungen ein zeitlich variierendes Magnetfeld erzeugt wird.

Um auch bei hohen Frequenzen eine möglichst hohe Drehbeschleunigung mit der Vorrichtung erzielen zu können, ist es günstig, wenn im Luftspalt zwischen den beiden Wellen eine Kurzschlusswicklung angeordnet ist. Durch das Vorsehen einer Kurzschlusswicklung kann die Induktivität der ein zeitlich variierendes Magnetfeld erzeugenden Leiter klein gehalten werden und somit vergleichsweise hohe Drehbeschleunigungswerte erzielt werden. Im Falle, dass eine der beiden Wellen einen Ringspalt zur Aufnahme eines Hohlwellen-Abschnitts der anderen Welle aufweist, ist es zur Erzielung möglichst hoher Drehbeschleunigungen von Vorteil, wenn beidseits des im Ringspalt der einen Welle aufgenommenen zylindrischen Hohlwellen-Abschnitts der anderen Welle jeweils eine Kurzschlusswicklung angeordnet ist.

Weiters ist es zur Erzielung möglichst hoher Drehbeschleunigungen von Vorteil, wenn die Leiterwicklungen als Hohlleiter oder Supraleiter ausgebildet sind. Hierbei ist es zur Kühlung der Hohlleiter günstig, wenn die Hohlleiter von einem Kühlmedium durchströmt werden.

Um Drehschwingungen zu erzeugen, bei welchen die beiden Wellen um bis zu ± 20° zueinander verschwenkt werden, ist es vorteilhaft, wenn die variabel mit Strom beaufschlagten Leiter auf der Welle in mehrere, vorzugsweise vier, umfangsseitig gleichmäßig verteilte Segmente unterteilt sind, wobei die Abschnitte zwischen den Leiter-Segmenten frei von Leitern sind.

Um ein Auslenken der beiden Wellen zueinander in beide Richtungen zu erzielen, ist es gemäß dem erfindungsgemäßen Verfahren vorteilhaft, wenn die Leiter mit einem Wechselstrom angespeist werden.

Tests haben gezeigt, dass es zur Erzielung der gewünschten Drehbeschleunigungen von 10.000 rad/s² bis 40000 rad/s² von Vorteil ist, wenn Leiter mit einem Wechselstrom mit einer Frequenz zwischen 0 und 4000 Hz, vorzugsweise von im Wesentlichen 400 Hz, beaufschlagt werden. Ebenso ist es zur Erzielung der gewünschten Drehbeschleunigungen günstig, wenn die Leiterwicklungen variabel mit einer Stromstärke zwischen 300 und 2000 Ampere, vorzugsweise von 400 bis 1800 Ampere, und einer Spannung zwischen 30 und 250 Volt, vorzugsweise von 50 bis 190 Volt, beaufschlagt werden.

Zur Überprüfung eines mit der Ausgangswelle verbundenen Prüflings hinsichtlich seiner Belastbarkeit auf Drehschwingungen ist es vorteilhaft, wenn während einer Strom-Beaufschlagung der Leiter und der daraus folgenden Überlagerung der Magnetfelder die beiden Wellen mit einer Frequenz von 0 bis 4000 Hz, vorzugsweise von im Wesentlichen 400 Hz, zueinander schwingen.

Die Erfindung wird nachstehend anhand von in den Zeichnungen dargestellten bevorzugten Ausführungsbeispielen, auf die sie jedoch nicht beschränkt sein soll, noch näher erläutert.

Im Einzelnen zeigen in den Zeichnungen:
Fig. 1 eine schematische Ansicht einer Vorrichtung zur Erzeugung von Drehschwingungen mit einer direkt an einen Elektromotor angeschlossenen Eingangswelle;
Fig. 2 schematisch eine Ansicht einer Vorrichtung zur Erzeugung von Drehschwingungen, wobei die Eingangswelle über einen Antriebsriemen mit einem Elektromotor gekuppelt ist;
Fig. 3 eine Ansicht der Vorrichtung zur Erzeugung von Drehschwingungen;
Fig. 4 einen Schnitt gemäß der Linie IV-IV in Fig. 3;
Fig. 5 einen Schnitt gemäß der Linie V-V in Fig. 3;
Fig. 6 im Detail eine Schnittansicht eines Ringspalts der Eingangswelle, in welcher ein Abschnitt der Ausgangswelle aufgenommen ist;
Fig. 7 eine perspektivische Ansicht eines faserverstärkten Gehäuses einer Ausgangswelle der Vorrichtung;
Fig. 8 im Detail den Übergangsbereich zwischen Ein- und Ausgangswelle; und
Fig. 9 eine Ansicht der Vorrichtung mit einem schematisch skizzierten Magnetfeld.

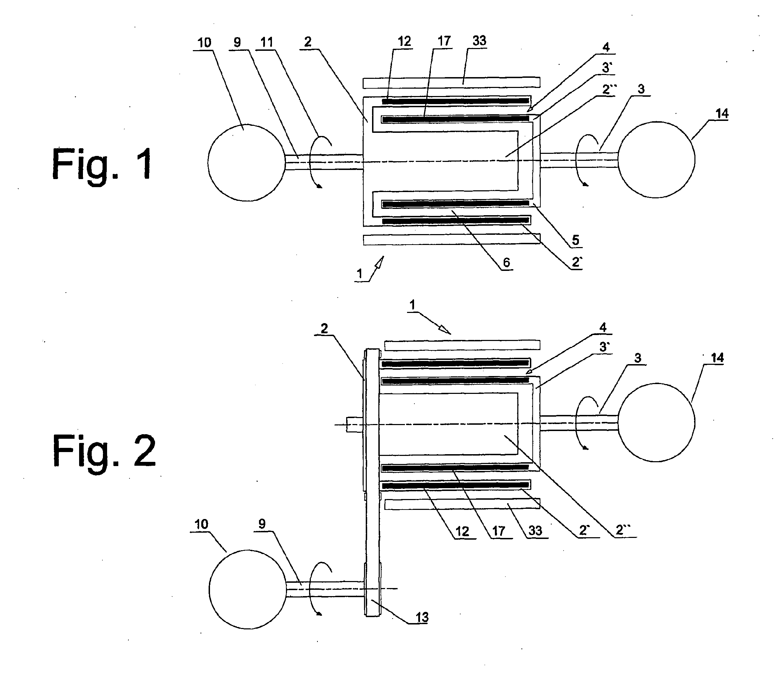

Fig. 1 zeigt eine Vorrichtung 1 zur Erzeugung von Drehschwingungen mit einer Eingangswelle 2 und einer Ausgangswelle 3, die zueinander verschwenkbar angeordnet sind. Hierbei weist die Eingangswelle 2 einen Ringspalt 4 auf, in welchem ein Hohlwellen-Abschnitt 3' der Ausgangswelle 3 unter Ausbildung eines Luftspalts 6 aufgenommen ist. Die Eingangswelle 2 setzt sich somit aus einem Außenrotor 2' und einem Innenrotor 2'' zusammen, wobei den Außenrotor 2' ein Stator 33 umschließt, in welchen der Magentfluss vom Außenrotor 2' über einen Luftspalt geführt wird. Hierdurch kann der Außenrotor 2' dünnwandig ausgeführt werden, wodurch das Trägheitsmoment des Außenrotors vorteilhafterweise gering gehalten werden kann. Selbstverständlich wäre es auch denkbar, dass der Innenrotor 2'' vollkommen entfällt und der Hohlwellen-Abschnitt 3' der Ausgangswelle 3 voll ausgebildet ist.

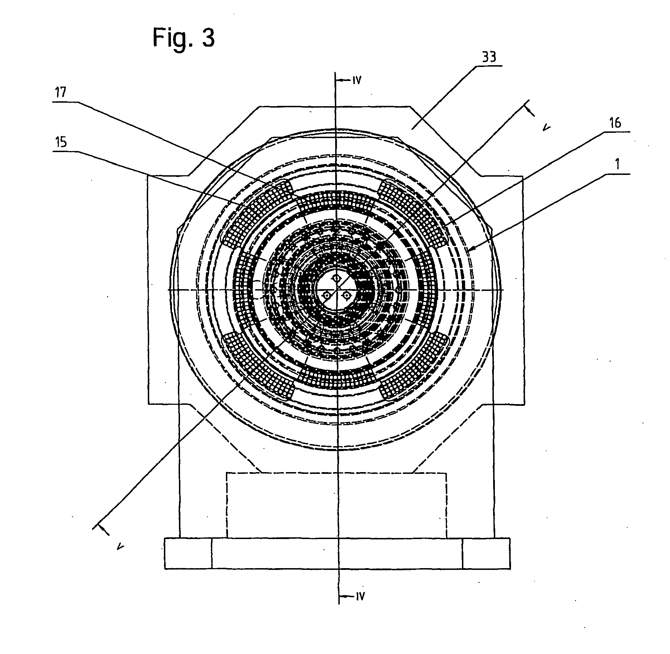

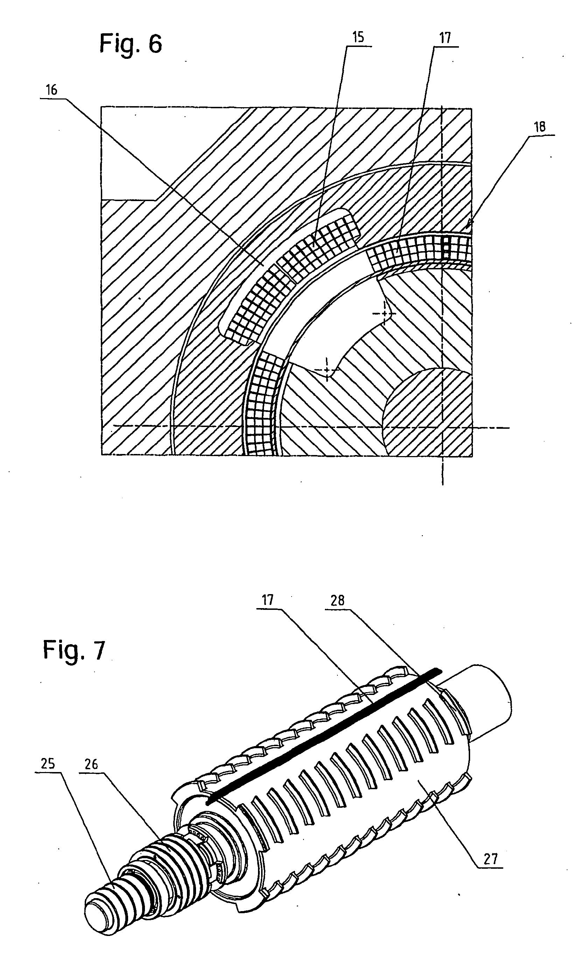

Die Eingangswelle 2 ist bei dem in Fig. 1 gezeigten Ausführungsbeispiel direkt mit einer Antriebswelle 9 eines Elektromotors 10 verbunden, über welchen die Eingangswelle 2 in Drehrichtung 11 mit einer im Wesentlichen konstanten Drehzahl rotiert wird. Hierbei sind in dem Außenrotor 2' der Eingangswelle 2 schematisch dargestellte Mittel 12 angeordnet, über welche ein im Wesentlichen konstantes Magnetfeld erzeugt wird. Als Mittel 12 zum Erzeugen eines im Wesentlichen konstanten Magnetfelds sind bei dem gezeigten Ausführungsbeispiel von einer Gleichstromquelle angespeiste Hohlleiter 15 (vgl. Fig. 3 und 6) vorgesehen; alternativ zu den Hohlleitern 15 können jedoch auch Permanentmagnete im Außenrotor 2' vorgesehen sein.

In dem im Ringspalt 4 angeordneten Hohlwellen-Abschnitt 3' der Ausgangswelle 3 hingegen sind Hohlleiter 17 vorgesehen, welche mit einem zeitlich variierenden Strom einer Stromstärke von ca. 1500 Ampere und einer Spannung von ca. 200 Volt durchströmt werden, so dass durch die in den stromdurchflossenen Hohlleitern 17 erzeugte Magnetkraft eine Drehbeschleunigung zwischen den Wellen 2 und 3 bewirkt, und somit die gewünschten hochfrequenten Drehschwingungen von bis zu 4000 Hz erzielt werden. An die Ausgangswelle 3 ist ein Prüfling 14 angeschlossen, der somit den Drehschwingungen der Ausgangswelle 3 ausgesetzt wird.

In Fig. 2 ist eine im Wesentlichen gleich aufgebaute elektrodynamische Vorrichtung 1 zur Erzeugung von Drehschwingungen mit einer Eingangswelle 2 gezeigt, die einen Ringspalt 4 zur Aufnahme eines Hohlwellen-Abschnitts 3' der Ausgangswelle 3 aufweist, an welche ein Prüfling 14 angeschlossen ist. Zudem sind auch hier in dem den Hohlwellen-Abschnitt 5 umgebenden Außenrotor 2' der Eingangswelle 2 die Mittel 12 zum Erzeugen eines im Wesentlichen konstanten Magnetfeldes aufgenommen und im Hohlwellen-Abschnitt 3' sind Leiterwicklungen 17 zum Erzeugen eines zeitlich variierenden Magnetfelds vorgesehen. Einziger Unterschied zu dem in Fig. 1 schematisch gezeigten Ausführungsbeispiel ist, dass die Eingangswelle 2 nicht direkt vom Elektromotor 10 angetrieben wird, sondern zwischen der Antriebswelle 9 des Elektromotors 10 und der Eingangswelle 2 zur Drehmomentübertragung ein Antriebsriemen 13 vorgesehen ist. Selbstverständlich könnte auch hier die Anordnung der Mittel 12 zum Erzeugen eines konstanten Magnetfelds und der Leiter 17 zum Erzeugen eines zeitlich variierenden Magnetfelds umgekehrt in der Ein- bzw. Ausgangswelle vorgesehen sein bzw. auch die Eingangswelle 2 in einem Ringspalt der Ausgangswelle 3 angeordnet sein.

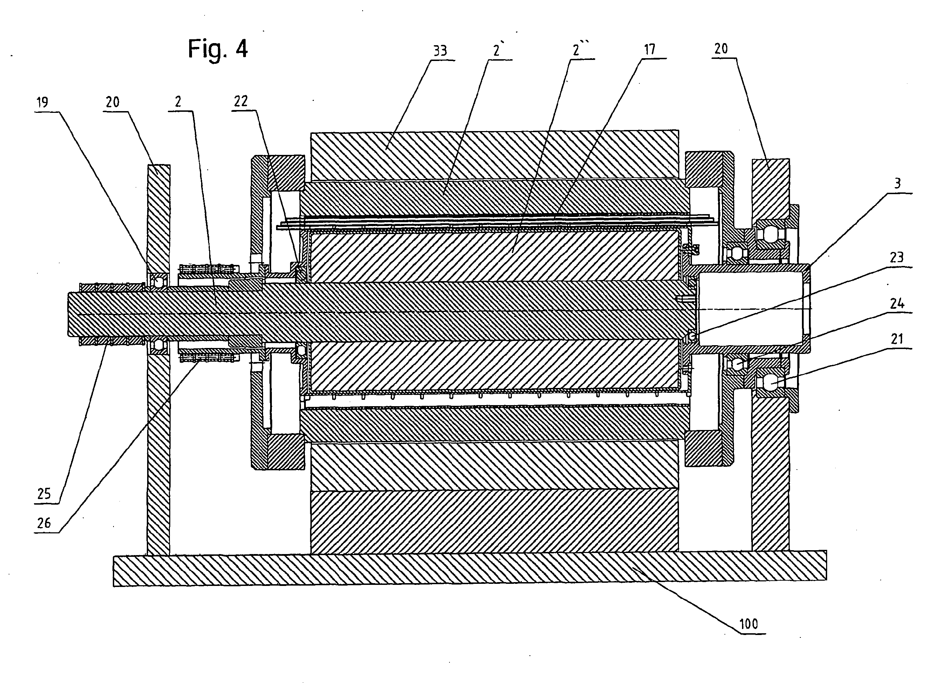

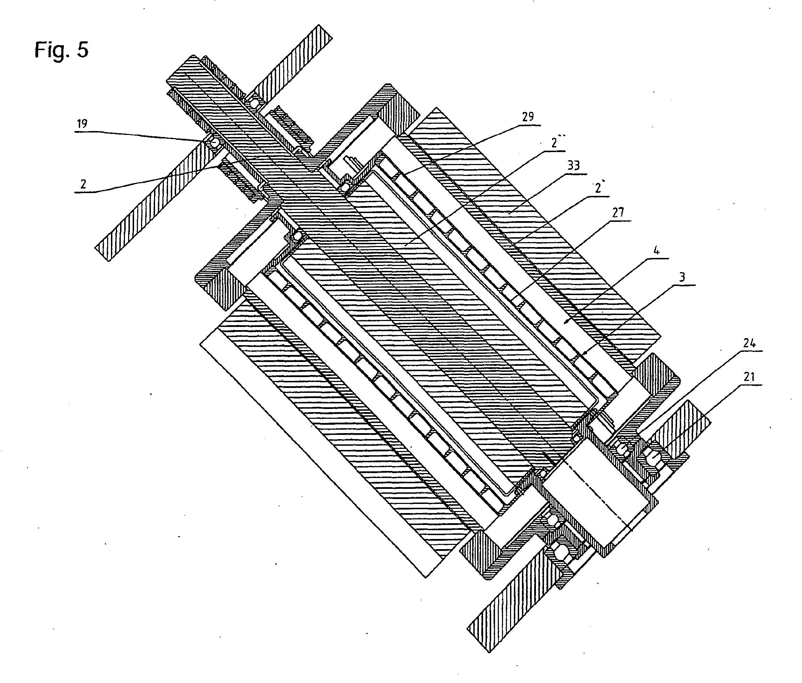

In Fig. 3 ist eine Ansicht der elektrodynamischen Vorrichtung 1 zur Erzeugung von Drehschwingungen gezeigt, wobei insbesondere ersichtlich ist, dass die Leiter 15 in vier Segmenten 16 gleich verteilt über den Umfang des Außenrotors 2' der Eingangswelle 2 (vgl. Fig. 4 und Fig. 5) angeordnet sind. Der in den Fig. 3 und 6 gezeigten Mittellage der beiden zueinander verschwenkbar angeordneten Wellen 2, 3 sind hiezu versetzt Leiter 17 in vier kreissegmentförmigen Abschnitten 18 angeordnet, die von der Ausgangswelle 3 getragen werden.

In Fig. 4 ist insbesondere die verschwenkbare Lagerung der Eingangswelle 2 und der Ausgangswelle 3 ersichtlich. Dabei ist die Eingangswelle 2 zunächst über ein Lager 19 in einem Lagergehäuse 20 drehbar gelagert. Zudem ist die Gesamtanordnung über ein Lager 21 in dem Lagergehäuse 20 drehbar gelagert. Die Ausgangswelle 3 ist gegenüber dem Innenrotor 2" der Eingangswelle 2 über Lager 22 und 23 gelagert und gegenüber dem Außenrotor 2' der Eingangswelle 2 über ein Lager 24. Sofern die Eingangswelle 2 drehfest angeordnet ist, können die Lager 19 und 21 entfallen.

Zudem sind in Fig. 4 auf der Eingangswelle 2 angeordnete Schleifringe 25 ersichtlich, über welche Hohlleiter 15 über eine Gleichstromquelle zur Erzeugung eines im Wesentlichen konstanten Magnetfelds mit Strom versorgt werden..

Weiters sind Schleifringe 26 ersichtlich, die auf der Ausgangswelle 3 angeordnet sind, über welche die Hohlleiter 17 variabel mit Strom beaufschlagt werden, so dass aufgrund der sich überlagernden Magnetfelder die Ausgangswelle 3 in Drehschwingung versetzt wird. Die Schleifringe 26 können alternativ auch auf der Eingangswelle 2 angeordnet sein und über flexible Leiter mit den Hohlleitern 17 verbunden sein.

In der Schnittansicht gemäß Fig. 5 sowie der perspektivischen Ansicht gemäß Fig. 7 ist insbesondere der konstruktive Aufbau der Ausgangswelle 3 ersichtlich. Hierbei ist ein Gehäuse 27 aus einem faserverstärkten Material, z.B. Carbon, vorgesehen, welches in Längsrichtung beabstandete, in vier Segmente unterteilte, radial vorspringende Steher 28 aufweist, zwischen welchen die Hohlleiter 17 angeordnet sind und welche somit als Drehmoment-Abstützung für die Hohlleiter 17 dienen. Zudem weist die Ausgangswelle 3 ein Außengehäuse 29 zur Aufnahme der Hohlleiter 17 auf, das ebenfalls aus einem faserverstärkten Material besteht. Alternativ kann die Ausgangswelle 3 auch ohne Gehäuse 27, 29 als freitragende Leiter-Konstruktion ausgebildet sein, bei der die Leiter 17 miteinander freitragend verbunden (z.B. verklebt) sind.

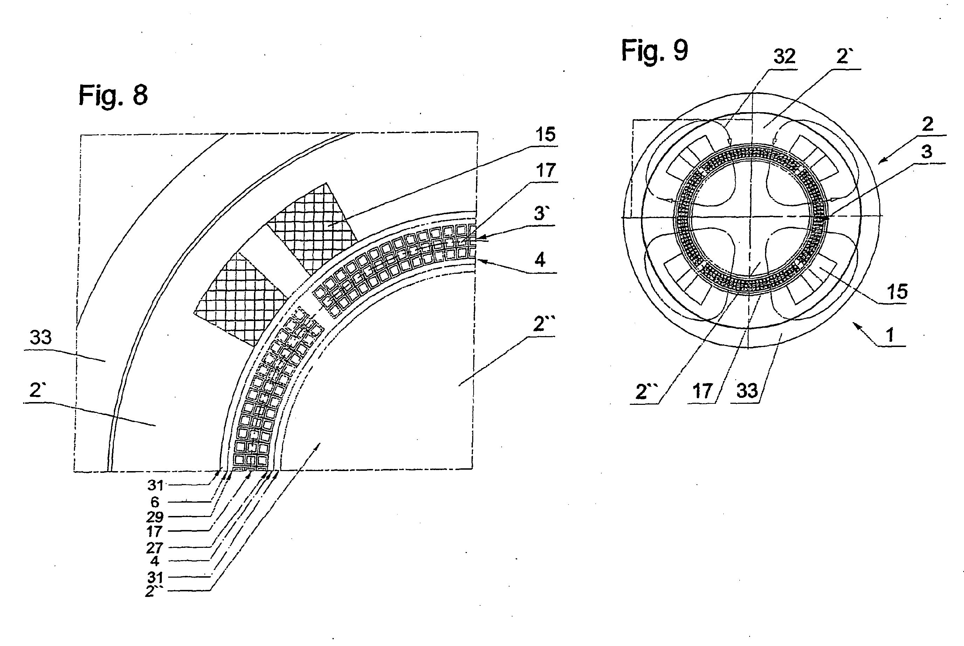

In der Detailansicht gemäß Fig. 8 ist der Ringspalt 4, in welchem der Hohlwellen-Abschnitt 3' der Ausgangswelle 3 aufgenommen ist, im Detail gezeigt. Bei dem gegenüber Fig. 6 geringfügig modifizierten Ausführungsbeispiel ist insbesondere ersichtlich, dass als elektrische Leiter 17, welche ein zeitlich variierendes Magnetfeld erzeugen, Hohlleiter vorgesehen sind, welche vorzugsweise aus Aluminium bestehen und zur Kühlung von einem gasförmigen oder flüssigen Medium durchströmt werden. Die Hohlleiter 17 sind hierbei in mehreren, z.B. drei Lagen zwischen dem Innengehäuse 27 und dem Außengehäuse 29 aufgenommen. Zudem ist in dem Luftspalt 6 zwischen den Innenrotor 2" und dem Außenrotor 2' der Eingangswelle 2 radial innerhalb und außerhalb der Leiter 17 jeweils eine Kurzschlusswicklung 31 angeordnet, um die Induktivität der Leiter 17 klein zu halten und somit auch bei hohen Frequenzen eine möglichst hohe Drehbeschleunigung mit der Vorrichtung 1 erzielen zu können.

In Fig. 9 ist die Vorrichtung 1 noch schematisch in einer Mittellage der zueinander verschwenkbar angeordneten Wellen 2 und 3 gezeigt, wobei der Fluss des von den Leitern 15 der Eingangswelle 2 erzeugten, betragsmäßig zeitlich im Wesentlichen konstanten Magnetfelds mit den Magnetfeldlinien 32 schematisch gezeigt ist. Der Magnetfluss verläuft vom Außenrotor 2' über den Luftspalt 6 usw. über den Innenrotor 2" zurück über den Luftspalt in den Außenrotor 2', von dort weiter in den Stator 33 und von diesem wieder zurück in den Außenrotor 2'. Um etwaige Wirbelstromverluste möglichst gering zu halten, ist der Stator 33 geblecht ausgeführt. Sofern die Leiter 17 variabel mit Strom beaufschlagt werden, wird das Magnetfeld 32 von dem von den Leitern 17 erzeugten Magnetfeld überlagert und somit eine Verschwenkung der Ausgangswelle 3 gegenüber der Eingangswelle 2 um ca. ± 20° erzielt. Hierbei werden die Leiter 17 üblicherweise mit einer Stromstärke von ca. 300 bis 2000 Ampere und einer Spannung von ca. 30 bis 250 Volt beaufschlagt, wobei durch Drehschwingungen mit einer Frequenz von ca. 4 kHz und bei einem Prüfling mit einem Trägheitsmoment von ca. 0,2 kgm² Drehbeschleunigungen von ca. 30000 rad/s² erzielt werden können.

Die konkrete Ausgestaltung der Ausgangs- bzw. Eingangswelle bzw. welche der beiden Wellen ein betragsmäßig zeitlich im Wesentlichen konstantes Magnetfeld und welche ein variables Magnetfeld erzeugt, kann auch anders als in dem gezeigten Ausführungsbeispiel gewählt werden, wesentlich ist lediglich, dass ein betragsmäßig zeitlich im Wesentlichen konstantes Magnetfeld von einem zeitlich variierenden Magnetfeld zwecks Erzeugung von Drehbeschleunigungen zwischen den beiden zueinander verschwenkbar angeordneten Wellen überlagert wird.

## Patentansprüche

1. Vorrichtung (1) zur Erzeugung von Drehschwingungen mit zwei zueinander verschwenkbaren Wellen (2, 3), wobei ein Endabschnitt einer ersten Welle (2, 3) unter Ausbildung eines Luftspalts (6) innerhalb eines Endabschnitts einer zweiten Welle (2, 3) aufgenommen ist, **dadurch gekennzeichnet, dass** eine der beiden Wellen (2, 3) Mittel (12) zum Erzeugen eines Magnetfelds mit im Wesentlichen konstanter Feldstärke aufweist und die andere Welle (2, 3) ein magnetisches Feld erzeugende Leiter (17) aufweist, die zum Verschwenken der Wellen (2, 3) zueinander variabel mit Strom beaufschlagbar sind.

2. Vorrichtung nach Anspruch 1, **dadurch gekennzeichnet, dass** als Mittel (12) zum Erzeugen eines Magnetfelds mit im Wesentlichen konstanter Feldstärke an eine Stromquelle angeschlossene Leiter (15) vorgesehen sind.

3. Vorrichtung nach Anspruch 1, **dadurch gekennzeichnet, dass** als Mittel (12) zum Erzeugen eines Magnetfelds mit konstanter Feldstärke Permanentmagnete vorgesehen sind.

4. Vorrichtung nach einem der Ansprüche 1 bis 3, **dadurch gekennzeichnet, dass** die beiden Wellen (2, 3) frei drehbar gelagert sind, wobei die als Eingangswelle ausgebildete Welle (2) angetrieben ist.

5. Vorrichtung nach Anspruch 4, **dadurch gekennzeichnet, dass** die Eingangswelle (2) direkt mit einer Antriebswelle (9) einer Antriebsvorrichtung, insbesondere eines Elektromotors (10), verbunden ist.

6. Vorrichtung nach Anspruch 4, **dadurch gekennzeichnet, dass** die Eingangswelle (2) über eine Drehmomentübertragungsvorrichtung, z.B. einen Antriebsriemen (13), mit einer Antriebswelle (9) einer Antriebsvorrichtung, insbesondere eines Elektromotors (10), verbunden ist.

7. Vorrichtung nach einem der Ansprüche 1 bis 6, **dadurch gekennzeichnet, dass** eine der beiden Wellen (2, 3) einen Ringspalt (4) zur Ausbildung des Luftspalts (6) und zur Aufnahme eines zylindrischen Hohlwellen-Abschnitts (3') der anderen Welle (2, 3) aufweist.

8. Vorrichtung nach Anspruch 7, **dadurch gekennzeichnet, dass** die Mittel (12) zum Erzeugen eines Magnetfelds mit im Wesentlichen konstanter Feldstärke oder die Leiter (17) in dem radial außerhalb des Ringspalts (4) angeordneten Teil (2') der Welle (2, 3) angeordnet sind.

9. Vorrichtung nach Anspruch 7 oder 8, **dadurch gekennzeichnet, dass** die Eingangswelle (2) den Ringspalt (4) zur Aufnahme des zylindrischen Hohlwellen-Abschnitts (3') der Ausgangswelle (3) aufweist.

10. Vorrichtung nach einem der Ansprüche 7 bis 9, **dadurch gekennzeichnet, dass** der radial außerhalb des Ringspalts (4) angeordnete, drehbare Teil (2') von einem drehfest angeordneten Stator (33) umgeben ist.

11. Vorrichtung nach einem der Ansprüche 4 bis 10, **dadurch gekennzeichnet, dass** die Eingangswelle (2) die Mittel (12) zum Erzeugen eines Magnetfelds mit im Wesentlichen konstanter Feldstärke und die Ausgangswelle (3) die variabel mit Strom beaufschlagbaren Leiter (17) aufweist.

12. Vorrichtung nach einem der Ansprüche 1 bis 11, **dadurch gekennzeichnet, dass** im Luftspalt (6) zwischen den beiden Wellen eine Kurzschlusswicklung (31) angeordnet ist.

13. Vorrichtung nach einem der Ansprüche 8 bis 12, **dadurch gekennzeichnet, dass** beidseits des im Ringspalt (4) der einen Welle (2,3) aufgenommenen zylindrischen Hohlwellen-Abschnitts (3') der anderen Welle (2, 3) jeweils eine Kurzschlusswicklung (31) angeordnet ist.

14. Vorrichtung nach einem der Ansprüche 1 bis 13, **dadurch gekennzeichnet, dass** die Leiter (15, 17) als Hohlleiter ausgebildet sind.

15. Vorrichtung nach einem der Ansprüche 1 bis 14, **dadurch gekennzeichnet, dass** die variabel mit Strom beaufschlagten Leiter (17) auf der Welle (3) in mehrere, vorzugsweise vier, umfangsseitig gleichmäßig verteilte Segmente (16) unterteilt sind, wobei die Abschnitte zwischen den Leiter-Segmenten (16) frei von Leitern (17) sind.

## Claims

1. An apparatus (1) for generating rotary oscillations, including two shafts (2, 3) which are pivotable relative to each other, wherein an end section of a first shaft (2, 3) is accommodated within an end section of a second shaft (2, 3) while forming an air gap (6), **characterised in that** one of the two shafts (2, 3) comprises means (12) for generating a magnetic field of substantially constant field strength, and that the other shaft (2, 3) comprises conductors (17) generating a magnetic field, wherein current can be variably applied to said conductors for pivoting the shafts (2, 3) relative to each other.

2. The apparatus according to claim 1, **characterised in that** conductors (15) connected to a current source are provided as said means (12) for generating a magnetic field of substantially constant field strength.

3. The apparatus according to claim 1, **characterised in that** permanent magnets are provided as said means (12) for generating a magnetic field of constant field strength.

4. The apparatus according to any one of claims 1 to 3, **characterised in that** the two shafts (2, 3) are mounted in a freely rotatable manner, wherein the shaft (2) which is designed as an input shaft is driven.

5. The apparatus according to claim 4, **characterised in that** the input shaft (2) is directly connected with a drive shaft (9) of a drive unit, in particular of an electric motor (10).

6. The apparatus according to claim 4, **characterised in that** the input shaft (2) is connected with a drive shaft (9) of a drive unit, in particular of an electric motor (10), via a torque-transmission device, e.g. a drive belt (13).

7. The apparatus according to any one of claims 1 to 6, **characterised in that** one of the two shafts (2, 3) has an annular gap (4) for creating the air gap (6) and for accommodating a cylindrical hollow-shaft section (3') of the other shaft (2, 3).

8. The apparatus according to claim 7, **characterised in that** the means (12) for generating a magnetic field of substantially constant field strength, or the conductors (17), are arranged in the part (2') of the shaft (2, 3), that is provided radially outside the annular gap (4).

9. The apparatus according to claim 7 or 8, **characterised in that** the input shaft (2) comprises the annular gap (4) for accommodating the cylindrical hollow-shaft section (3') of the output shaft (3).

10. The apparatus according to any one of claims 7 to 9, **characterised in that** the rotatable part (2') arranged radially outside the annular gap (4) is surrounded by a stator (33) that is arranged in a torque-proof manner.

11. The apparatus according to any one of claims 4 to 10, **characterised in that** the input shaft (2) comprises the means (12) for generating a magnetic field of substantially constant field strength, and that the output shaft (3) comprises the conductors (17) to which current can be variably applied.

12. The apparatus according to any one of claims 1 to 11, **characterised in that** a cage winding (31) is arranged in the air gap (6) between the two shafts.

13. The apparatus according to any one of claims 8 to 12, **characterised in that** one cage winding (31) is each provided on either side of the cylindrical hollow-shaft section (3') of the one shaft (2, 3) accommodated in the annular gap (4) of the other shaft (2, 3).

14. The apparatus according to any one of claims 1 to 13, **characterised in that** the conductors (15, 17) are designed as hollow conductors.

15. The apparatus according to any one of claims 1 to 14, **characterised in that** the conductors (17) to which current is variably applied are divided into several, preferably four, segments (16) peripherally distributed in a uniform manner on the shaft (3), wherein the sections between the conductor segments (16) are free of conductors (17).

## Revendications

1. Dispositif (1) pour générer des vibrations torsionnelles avec deux arbres (2, 3) pouvant pivoter l'un par rapport à l'autre, une section d'extrémité d'un premier arbre (2, 3) étant reçue en réalisant un entrefer (6) dans une section d'extrémité d'un second arbre (2, 3), **caractérisé en ce que** l'un des deux arbres (2, 3) présente des moyens (12) pour générer un champ magnétique avec une intensité de champ essentiellement constante et l'autre arbre (2, 3) présente des conducteurs (17) générant un champ magnétique qui peuvent être alimentés en courant de manière variable pour le pivotement des arbres (2, 3) l'un par rapport à l'autre.

2. Dispositif selon la revendication 1, **caractérisé en ce que** comme moyens (12) pour générer un champ magnétique avec une intensité de champ essentiellement constante sont prévus des conducteurs (15) raccordés à une source de courant.

3. Dispositif selon la revendication 1, **caractérisé en ce que** comme moyens (12) pour générer un champ magnétique avec une intensité de champ constante sont prévus des aimants permanents.

4. Dispositif selon l'une quelconque des revendications 1 à 3, **caractérisé en ce que** les deux arbres (2, 3) sont logés de manière librement rotative, l'arbre (2) réalisé comme arbre d'entrée étant entraîné.

5. Dispositif selon la revendication 4, **caractérisé en ce que** l'arbre d'entrée (2) est relié directement à un arbre d'entraînement (9) d'un dispositif d'entraînement, en particulier d'un moteur électrique (10).

6. Dispositif selon la revendication 4, **caractérisé en ce que** l'arbre d'entrée (2) est relié par un dispositif de transmission de couple, par exemple une courroie de transmission (13), à un arbre d'entraînement (9) d'un dispositif d'entraînement, en particulier d'un moteur électrique (10).

7. Dispositif selon l'une quelconque des revendications 1 à 6, **caractérisé en ce que** l'un des deux arbres (2, 3) présente une fente annulaire (4) pour la réalisation de l'entrefer (6) et pour la réception d'une section d'arbre creux (3') cylindrique de l'autre arbre (2, 3).

8. Dispositif selon la revendication 7, **caractérisé en ce que** les moyens (12) pour générer un champ magnétique avec une intensité de champ essentiellement constante
ou les conducteurs (17) sont disposés dans la partie (2') de l'arbre (2, 3) disposée radialement en dehors de la fente annulaire (4).

9. Dispositif selon la revendication 7 ou 8, **caractérisé en ce que** l'arbre d'entrée (2) présente la fente annulaire (4) pour la réception de la section d'arbre creux (3') cylindrique de l'arbre de sortie (3).

10. Dispositif selon l'une quelconque des revendications 7 à 9, **caractérisé en ce que** la partie (2') rotative, disposée radialement en dehors de la fente annulaire (4) est entourée d'un stator (33) disposé de manière bloquée en rotation.

11. Dispositif selon l'une quelconque des revendications 4 à 10, **caractérisé en ce que** l'arbre d'entrée (2) présente les moyens (12) pour générer un champ magnétique avec une intensité de champ essentiellement constante et l'arbre de sortie (3) présente les conducteurs (17) pouvant être alimentés de manière variable en courant.

12. Dispositif selon l'une quelconque des revendications 1 à 11, **caractérisé en ce qu'**un enroulement en court-circuit (31) est disposé dans l'entrefer (6) entre les deux arbres.

13. Dispositif selon l'une quelconque des revendications 8 à 12, **caractérisé en ce que** de part et d'autre de la section d'arbre creux (3') de l'autre arbre (2, 3) cylindrique, reçue dans l'entrefer (4) d'un arbre (2, 3) est disposé respectivement un enroulement en court-circuit (31).

14. Dispositif selon l'une quelconque des revendications 1 à 13, **caractérisé en ce que** les conducteurs (15, 17) sont réalisés comme des conducteurs creux.

15. Dispositif selon l'une quelconque des revendications 1 à 14, **caractérisé en ce que** les conducteurs (17) pouvant être alimentés de manière variable en courant sur l'arbre (3) sont divisés en plusieurs, de préférence quatre segments (16) répartis uniformément côté périphérie, les sections entre les segments de conducteur (16) étant exemptes de conducteurs (17).
